# EUROPEAN PATENT APPLICATION

(11) **EP 3 543 929 A1**
(43) Date of publication of application: **25.09.2019**
(21) Application number: 17890312.6
(22) Date of filing: 25.12.2017
(51) Int. Cl.: G06Q 20/12, G06Q 20/22, G06Q 20/38

(54) **CURRENCY TYPE SWITCHING METHOD AND DEVICE**

(30) Priority: 03.01.2017 CN 201710002177
(71) Applicant: Alibaba Group Holding Limited, Grand Cayman (KY)
(72) Inventor: NI, Fei, Hangzhou Zhejiang 311121 (CN)
(74) Representative: Branderhorst, Matthijs Pieter Arie
(86) International application number: PCT/CN2017/118230
(87) International publication number: WO 2018/126920

(57) **Abstract**

Provided is a currency type switching method and device. The currency type switching method includes: determining a user-selected currency type and a payment channel for a payment (110); judging whether the payment channel supports the user-selected currency type (120); and if the payment channel does not support the user-selected currency type, switching the user-selected currency type to a currency type supported by the payment channel (130). In a payment process, if a payment channel does not support a user-selected currency type, the user-selected currency type is automatically switched to a currency type supported by the payment channel without requiring a user to quit a checkout process, reselect a currency type and reenter the checkout process, enhancing user experience and payment efficiency.

## Description

### TECHNICAL FIELD

This application relates to the technical field of payment technologies, in particular to a currency type switching method and device.

### BACKGROUND

In some payment scenarios, different currency types are involved and a checkout device can support multiple currency types, so a user can pre-select a currency type for a payment.

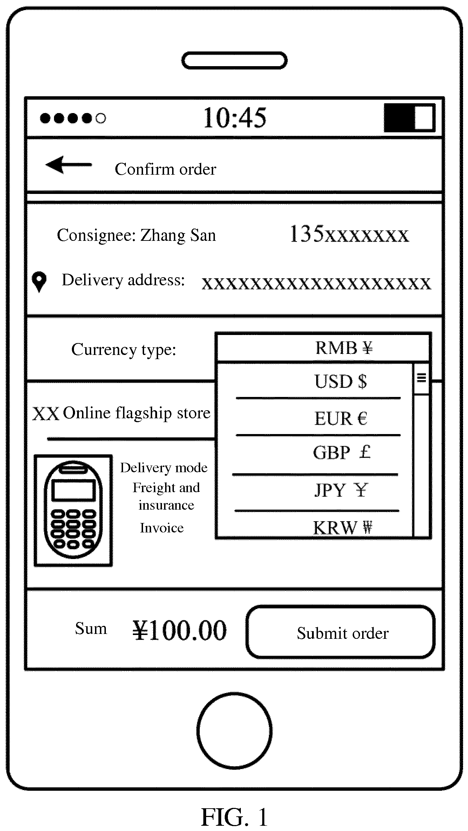

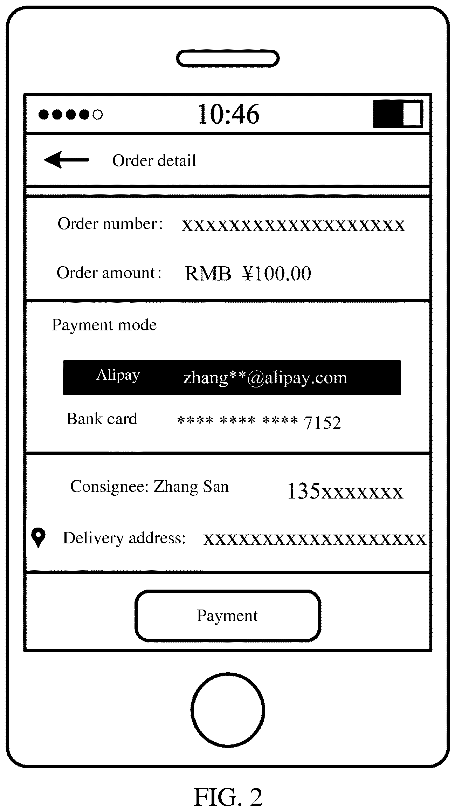

As shown in FIG. 1, in an international trading platform, a user can select different currency types, such as RMB, USD, EUR, GBP, JPY, and KRW when purchasing an electronic product. Generally, the user enters a checkout interface after submitting an order, as shown in FIG. 2: after selecting a payment channel, i.e. "payment mode", the payment channel selected by the user here being "Alipay", and checking order details, the user can click on a "payment" button to complete the payment.

In the existing technologies, after the user selects the payment channel, the checkout device detects whether the payment channel supports the user-selected currency type. In one case, the user-selected currency type may not be a currency type supported by the payment channel. For example, the user-selected currency type is JPY, while the payment channel does not support payments by JPY. For the case that the payment channel does not support the user-selected currency type, the checkout device usually reminds the user that the user-selected currency type is not supported and the payment cannot be completed, and in this case, the user is required to exit the checkout interface, reselect the currency type and pay again.

As mentioned above, the user needs to complete three steps (exit the checkout process, reselect the currency type, and enter the checkout process again for payment) to change the currency type, which significantly affects user experience and leads to low payment efficiency.

### SUMMARY

This application provides a currency type switching method and device to solve the problems of low payment efficiency and poor user experience in the existing technologies.

The currency type switching method provided by the embodiments of this application includes:
determining a user-selected currency type and a payment channel for a payment;
judging whether the payment channel supports the user-selected currency type; and
if the payment channel does not support the user-selected currency type, switching the currency type to a currency type supported by the payment channel.

Optionally, the step of judging whether the payment channel supports the user-selected currency type specifically includes:
determining a set of currency types supported by the payment channel; and
judging whether the user-selected currency type belongs to the set of currency types;
correspondingly, if the payment channel does not support the user-selected currency type, the step of switching the user-selected currency type to a currency type supported by the payment channel specifically includes:
   if the user-selected currency type does not belong to the set of currency types, switching the user-selected currency type to a currency type within the set of currency types.

Optionally, the step of switching the user-selected currency type to a currency type supported by the payment channel specifically includes:
acquiring a second currency type supported by an account of a user;
judging whether the payment channel supports the second currency type; and
if the payment channel supports the second currency type, switching the user-selected currency type to the second currency type.

Optionally, the step of switching the user-selected currency type to the second currency type if the payment channel supports the second currency type specifically includes:
if the payment channel supports the second currency type, acquiring a payment amount of the payment;
judging whether an account balance or a credit limit of the second currency type exceeds the payment amount; and
if the account balance or the credit limit of the second currency type exceeds the payment amount, switching the user-selected currency type to the second currency type.

Optionally, the method further includes:
calculating a payment amount of the currency type after switching according to an exchange rate.

A payment channel switching method provided by the embodiments of this application includes:
determining a user-selected currency type and a payment channel for a payment;
judging whether the payment channel supports the user-selected currency type; and
if the payment channel does not support the user-selected currency type, switching the payment channel to a payment channel supporting the user-selected currency type.

Optionally, judging whether the payment channel supports the user-selected currency type specifically includes:
determining a set of currency types supported by the payment channel; and
judging whether the user-selected currency type belongs to the set of currency types;
correspondingly, if the payment channel does not support the user-selected currency type, switching the payment channel to a payment channel supporting the currency type specifically includes:
   if the user-selected currency type does not belong to the set of currency types, switching the payment channel to a payment channel supporting the currency type.

Optionally, switching the payment channel to a payment channel supporting the currency type specifically includes:
acquiring second payment channels supporting the user-selected currency type;
according to historical usage information of the second payment channels, determining a second payment channel to be switched from the second payment channels; and
switching the payment channel to the second payment channel to be switched.

Optionally, determining a second payment channel to be switched from the second payment channels according to the historical usage information of the second payment channels specifically includes:
according to a number of historical uses of the second payment channels, selecting a second payment channel with the largest number of historical uses as the second payment channel to be switched.

Optionally, determining a second payment channel to be switched from the second payment channels according to the historical usage information of the second payment channels specifically includes:
according to the time of latest usage of the second payment channels, selecting a second payment channel with the nearest usage time as the second payment channel to be switched.

The currency type switching device provided by the embodiments of this application includes:
a determining unit which acquires a user-selected currency type and a payment channel for a payment;
a judging unit which judges whether the payment channel supports the user-selected currency type; and
a switching unit which switches the user-selected currency type to a currency type supported by the payment channel, if the payment channel does not support the user-selected currency type.

Optionally, the judging unit specifically includes:
a determining subunit which determines a set of currency types supported by the payment channel; and
a judging subunit which judges whether the user-selected currency type belongs to the set of currency types;
correspondingly, the switching unit is specifically configured to:
   if the user-selected currency type does not belong to the set of currency types, switch the user-selected currency type to a currency type within the set of currency types.

Optionally, the switching unit specifically includes:
a first acquiring subunit which acquires a second currency type supported by an account of a user;
a first judging subunit which judges whether the payment channel supports the second currency type; and
a switching subunit which switches the user-selected currency type to the second currency type, if the payment channel supports the second currency type.

Optionally, the switching subunit specifically includes:
a second acquiring subunit which acquires a payment amount of the payment, if the payment channel supports the second currency type;
a second judging subunit which judges whether an account balance or a credit limit of the second currency type exceeds the payment amount; and
a second switching subunit which switches the user-selected currency type to the second currency type, if the account balance or the credit limit of the second currency type exceeds the payment amount.

Optionally, the device further includes:
a calculating unit which calculates a payment amount of the currency type after switching according to an exchange rate.

A payment channel switching device provided by the embodiments of this application includes:
a determining unit which determines a user-selected currency type and a payment channel for a payment;
a judging unit which judges whether the payment channel supports the user-selected currency type; and
a switching unit which switches the payment channel to a payment channel supporting the currency type, if the payment channel does not support the user-selected currency type.

Optionally, the judging unit specifically includes:
a determining subunit which determines a set of currency types supported by the payment channel; and
a judging subunit which judges whether the user-selected currency type belongs to the set of currency types;
correspondingly, the switching unit is specifically configured to:
   if the user-selected currency type does not belong to the set of currency types, switch the payment channel to a payment channel supporting the currency type.

Optionally, the switching unit specifically includes:
an acquiring subunit which acquires second payment channels supporting the currency type;
a determining subunit which determines a second payment channel to be switched from the second payment channels, according to historical usage information of the second payment channels; and
a switching subunit which switches the payment channel to the second payment channel to be switched.

Optionally, the determining subunit is specifically configured to:
according to a number of historical uses of the second payment channels, select a second payment channel with the largest number of historical uses as the second payment channel to be switched.

Optionally, the determining subunit is specifically configured to:
according to the time of latest usage of the second payment channels, select a second payment channel with the nearest usage time as the second payment channel to be switched.

In the embodiments of this application, under the condition that the payment channel does not support the user-selected currency type, the user-selected currency type can be automatically and directly switched to a currency type supported by the payment channel at the checkout interface or the user-selected payment channel can be automatically and directly switched to a payment channel supporting the currency type at the checkout interface. Therefore, it is not necessary for the user to exit the current checkout interface, reselect a currency type and reenter the checkout process, thus improving payment efficiency and user experience.

### BRIEF DESCRIPTION OF THE DRAWINGS

FIG. 1 is a diagram of an order confirmation interface provided by this application;
FIG. 2 is a diagram of a checkout interface provided by this application;
FIG. 3 is a flowchart of a currency type switching method provided by an embodiment of this application;
FIG. 4 is a diagram of currency type switching provided by this application;
FIG. 5 is a flowchart of a payment channel switching method provided by an embodiment of this application;
FIG. 6 is a diagram of payment channel switching provided by this application;
FIG. 7 is a hardware structure diagram of the equipment where a currency type switching device provided by this application is located;
FIG. 8 is a modular diagram of a currency type switching device provided by an embodiment of this application;
FIG. 9 is a hardware structure diagram of the equipment where a payment channel switching device provided by this application is located; and
FIG. 10 is a modular diagram of a payment channel switching device provided by an embodiment of this application.

### DETAILED DESCRIPTION OF THE INVENTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with this application. Instead, they are merely examples of apparatuses and methods consistent with aspects related to this application as recited in the appended claims.

The terms used in this application are merely for the purpose of describing specific embodiments, and are not intended to limit this application. The terms "a", "said" and "the" of singular forms used in this application and the appended claims are also intended to include plural forms, unless otherwise specified in the context clearly. It should also be understood that, the term "and/or" used herein indicates and includes any or all possible combinations of one or more associated listed items.

It should be understood that although the terms such as first, second, and third may be used herein to describe various information, such information should not be limited to these terms. These terms are merely used for distinguishing information of the same type from each other. For example, within the scope of this application, first information may also be referred to as second information, and similarly, second information may also be referred to as first information. Depending on the context, the term " if " as used herein may be interpreted as " when ..." or "upon ..." or "in response to determining."

As described above, after a user selects a payment channel, a checkout device checks whether the payment channel supports the user-selected currency type. In one case, the user-selected currency type may not be a currency type supported by the payment channel. For example, the user-selected currency type is JPY, while the payment channel does not support payments by JPY. For the case that the payment channel does not support the user-selected currency type, the checkout device usually reminds the user that the selected currency type is not supported and the payment cannot be completed, and in this case, the user is required to exit the checkout interface, reselect the currency type and pay again.

The user needs to complete three steps (exit the checkout process, reselect the currency type, and enter the checkout process again for payment) to change the currency type, which significantly affects user experience and leads to low payment efficiency.

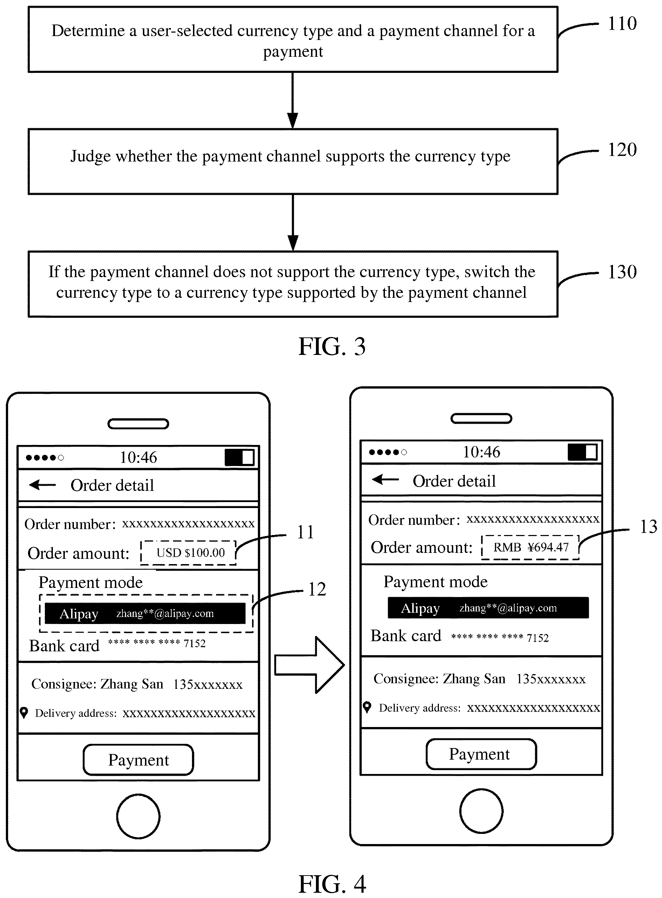

To solve the above problems, referring to FIG. 3 which is a flowchart of a currency type switching method provided by an embodiment of this application, the method is applied to a checkout device for payment application, and includes the following steps:
Step 110: determine a user-selected currency type and a payment channel for a payment.

In this embodiment, after selecting the currency type for the payment, the user enters the checkout interface to pay, and the user can also select the payment channel in the checkout interface.

The checkout device can determine the user-selected currency type and the payment channel for the payment.

It should be noted that the currency type or the payment channel can be selected by the user or has a default value. For example, a payment channel used last time may be taken as the payment channel for the current payment by default, and a currency type used last time may be taken as the currency type for the current payment by default.

In the diagram of the checkout interface shown in FIG. 2, the checkout device can determine the currency type as RMB according to the information in an order amount, and determine the payment channel as Alipay according to the content in a black box in a payment mode.

The technical carriers involved in the payment in the embodiments of this application may include, for example, Near Field Communication (NFC), WIFI, 3G/4G/5G, POS card swiping technology, two-dimensional code scanning technology, barcode scanning technology, Bluetooth, infrared, Short Message Service (SMS), Multimedia Message Service (MMS), etc.

Step 120: judge whether the payment channel supports the currency type.

In this embodiment, after determining the currency type and the payment channel, the checkout device can judge whether the payment channel supports the acquired currency type.

If it is determined that the payment channel does not support the currency type, a subsequent step 130 may be executed.

If it is determined that the payment channel supports the currency type, the checkout device only needs to wait for the user to confirm the payment without any further processing.

Step 130: if the payment channel does not support the currency type, switch the currency type to a currency type supported by the payment channel.

In this embodiment, if the payment channel does not support the currency type, the currency type can be switched to a currency type supported by the payment channel.

Specifically, the step 120 of judging whether the payment channel supports the currency type may include:
determining a set of currency types supported by the payment channel; and
judging whether the currency type belongs to the set of currency types;
correspondingly, the step 130 may specifically include:
   if the currency type does not belong to the set of currency types, switching the user-selected currency type to a currency type within the set of currency types.

In this embodiment, each payment channel may have a set of currency types, and the set of currency types contains at least one currency type supported by the payment channel.

For example, as shown in FIG. 4, the user-selected currency type for the payment is USD as shown in dashed box 11, and the payment channel is Alipay as shown in dashed box 12. Assuming that the set of currency types supported by Alipay is {RMB, EUR, GBP};
since USD is not in {RMB, EUR, GBP}, which means that Alipay does not support USD payment, the user-selected currency type can be switched to any currency type in {RMB, EUR, GBP}, as shown in dashed box 13, that is, to RMB.

According to the embodiments of this application, under the condition that the payment channel does not support the user-selected currency type, the user-selected currency type can be automatically and directly switched to a currency type supported by the payment channel at the checkout interface. Therefore, it is not necessary for the user to exit the current checkout interface and reselect a currency type, thus improving payment efficiency and user experience.

It should be noted that on the basis of the embodiment shown in FIG. 3, the method may further include:
calculating a payment amount of the currency type after switching according to an exchange rate.

In this embodiment, the remittance may be in a real-time exchange rate, for example, real-time remittance from the bank.

As shown in dashed box 13 in FIG. 4, besides currency type switching, it can also be calculated that 694.47 RMB can be exchanged for 100 USD according to a USD to RMB exchange rate.

According to this embodiment, the change of the payment amount after switching is further improved, so that the user can view the change conveniently, and user experience is further improved.

In practical applications, the currency types supported by an account of the user are also limited, and not all currency types are supported. For example, an account of a user A only supports two types of payment: RMB payment and USD payment. Therefore, a currency type after switching on the checkout interface may be supported by the payment channel but not supported by the account of the user, which still makes a payment impossible.

In order to solve this problem, in another embodiment of this application, the step of switching the currency type to a currency type supported by the payment channel may include:
A1: acquiring a second currency type supported by the account of the user;
A2: judging whether the payment channel supports the second currency type; and
A3: if the payment channel supports the second currency type, switching the user-selected currency type to the second currency type.

For example, assuming that the currency type selected by the user for the first time is USD, and the currency types supported by the payment channel are RMB, EUR and GBP;
since the payment channel does not support the user-selected USD, USD needs to be switched to a currency type supported by the payment channel.

In this case, the second currency type supported by the account of the user is acquired.

It should be noted that the second currency type may be currency types other than the user-selected currency type. For example, the currency types supported by the account of the user are USD, JPY, RMB, and EUR, and after excluding USD, the second currency type may be JPY, RMB, and EUR.

As JPY is still not a currency type supported by the payment channel, the determination on the next second currency type (RMB) is required.

Since RMB is a currency type supported by the payment channel, the user-selected currency type can be switched from the original USD to RMB.

It should be noted that EUR can also be used as the currency type after switching, but in order to improve switching efficiency, the principle of "first come, first served" can be adopted. Since RMB is already a currency type supported by the payment channel, it is no longer necessary to judge whether the payment channel supports EUR.

In this embodiment, when the payment channel does not support the currency type, the second currency type supported by the account of the user is acquired, and after it is determined that the payment channel supports the second currency type, the user-selected currency type is switched to the second currency type. In this way, it can be ensured that the currency type after switching is a currency type supported by the account of the user.

In practical applications, even if the account of the user supports the currency type after switching, the problem of insufficient account balance or credit limit may occur.

To solve the problem, in another embodiment of this application, the step A3 of switching the user-selected currency type to the second currency type if the payment channel supports the second currency type may specifically include:
A31: if the payment channel supports the second currency type, acquiring a payment amount of a current payment;
A32: judging whether an account balance or a credit limit of the second currency type exceeds the payment amount; and
A33: if the account balance or the credit limit of the second currency type exceeds the payment amount, switching the user-selected currency type to the second currency type.

In this embodiment, the account balance may be the balance in the account or the balance of a debit card.

The credit limit includes the remaining limit of a credit card.

"Exceeding" means greater than or equal to.

As shown in FIG. 4, under the condition that the payment channel supports RMB (the second currency type), the payment amount of the current payment 100 USD, i.e. 694.47 RMB is acquired.

Assuming that the account balance of the user is 1,000 RMB, then the account balance in RMB exceeds the payment amount and the payment can be made, so the user-selected currency type can be switched from the original USD to RMB.

According to this embodiment, the currency type after switching is supported by the account of the user. Moreover, the account balance or credit limit of the currency type after switching exceeds the payment amount, thus avoiding the payment failure problem caused by insufficient account balance or credit limit.

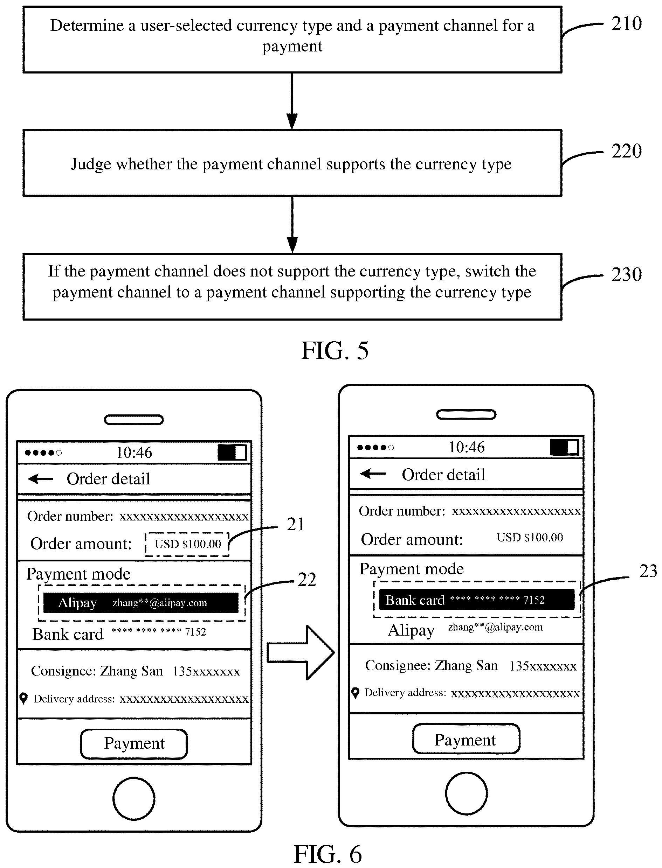

Similarly, to solve the problems of low payment efficiency and poor user experience in the existing technologies, referring to FIG. 5 which is a flowchart of a payment channel switching method provided by an embodiment of this application, the method is applied to a checkout device for payment application, and includes the following steps:
Step 210: determine a user-selected currency type and a payment channel for a payment.

In this embodiment, the step 210 is the same as the step 110 in the above embodiment, and will not be repeated here.

Step 220: judge whether the payment channel supports the currency type.

In this embodiment, if it is determined that the payment channel does not support the currency type, a subsequent step 230 may be executed.

If it is determined that the payment channel supports the currency type, the checkout device only needs to wait the user to confirm the payment without any processing.

S230: if the payment channel does not support the currency type, switch the payment channel to a payment channel supporting the currency type.

In this embodiment, if the payment channel does not support the currency type, the payment channel can be switched to a payment channel supporting the currency type.

Specifically, the step 220 of judging whether the payment channel supports the currency type may include:
determining a set of currency types supported by the payment channel; and
determining whether the currency type belongs to the set of currency types;
correspondingly, the step 230 may specifically include:
   if the currency type does not belong to the set of currency types, switching the payment channel to a payment channel supporting the currency type.

In this embodiment, each payment channel may have a set of currency types, and the set of currency types contains at least one currency type supported by the payment channel.

For example, as shown in FIG. 6, the user-selected currency type for the payment is USD as shown in dashed box 21, and the payment channel is Alipay as shown in dashed box 22. Assuming that the set of currency types supported by Alipay is {RMB, EUR, GBP};
since USD is not in {RMB, EUR, GBP}, which means that Alipay does not support USD payment, Alipay needs to be switched to a payment channel supporting USD.

Assuming that a set of currency types supported by "bank card **** **** **** 7152" is {RMB, USD}, Alipay can be switched to "bank card **** **** **** 7152" as shown in dashed box 23 because USD payment is supported.

According to the embodiments of this application, under the condition that the payment channel does not support the user-selected currency type, the user-selected payment channel can be automatically and directly switched to a payment channel supporting the currency type at the checkout interface. Therefore, it is not necessary for the user to exit the current checkout interface and reselect a currency type, thus improving payment efficiency and user experience.

It should be noted that during payment channel switching, there may be multiple payment channels supporting the currency type at the same time, and in practical applications, any payment channel may be randomly selected as the payment channel to be switched.

In a specific embodiment, switching the payment channel to a payment channel supporting the currency type specifically includes:
B1: acquiring second payment channels supporting the currency type;
B2: according to historical usage information of the second payment channels, determining a second payment channel to be switched from the second payment channels; and
B3: switching the payment channel to the second payment channel to be switched.

In this embodiment, the historical usage information may be a number of historical uses of the second payment channel, that is, the number of times the user successfully made payments using the second payment channel.

Alternatively, the historical usage information may be the time of latest usage of the second payment channel, that is, the last time the user successfully made payments using the second payment channel.

For the number of historical uses, the step B2 may specifically include:
according to the number of historical uses of the second payment channels, selecting a second payment channel with the largest number of historical uses as the second payment channel to be switched.

For example, assuming that the user-selected currency type for the payment is USD, and there are two second payment channels: bank card A and bank card B;
wherein the number of historical uses of bank card A is 100 and the number of historical uses of bank card B is 50, then bank card A can be determined as the second payment channel to be switched.

For the time of latest usage, the step B2 may specifically include:
according to the time of latest usage of the second payment channels, selecting a second payment channel with the nearest usage time as the second payment channel to be switched.

For example, assuming that the user-selected currency type for the payment is USD, and there are two second payment channels: bank card A and bank card B;
wherein the time of latest usage of bank card A is October 10, 2016, and the time of latest usage of bank card B is October 11, 2016, then bank card B can be determined as the second payment channel to be switched.

According to this embodiment, during payment channel switching, there are multiple second payment channels supporting the currency type at the same time, and a second payment channel with the largest number of historical uses or with the nearest time of latest usage can be selected as the second payment channel to be switched based on the historical usage information of the second payment channels, so that the payment channel after switching is more in line with the historical usage habits of the user.

Corresponding to the foregoing embodiment of the currency type switching method, this application also provides an embodiment of a currency type switching device.

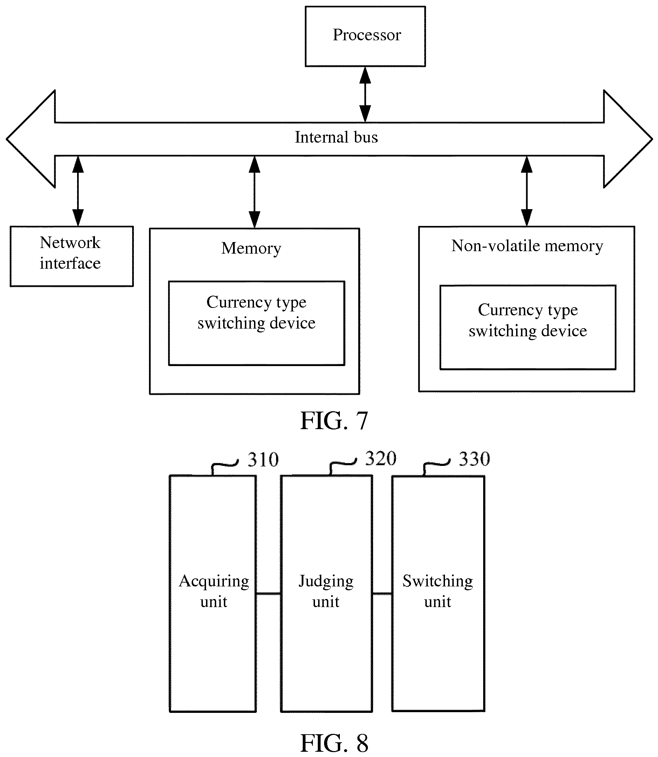

The embodiment of the currency type switching device of this application can be applied to a checkout device for payment application. The embodiment of the device may be implemented by software, or by hardware or a combination of hardware and software. Taking software implementation as an example, as a logical device, the device is formed by reading a corresponding computer program instruction in a non-volatile memory into a memory for operation through a processor of the equipment in which the device is located. In terms of hardware, as shown in FIG. 7 which is a hardware structure diagram of the equipment where the currency type switching device provided by this application is located, in addition to the processor, a network interface, the memory and the non-volatile memory shown in FIG. 7, the equipment where the device in the embodiment is located may also include other hardware according to an actual currency type switching function, which will not be described in detail here.

Referring to FIG. 8 which is a modular diagram of the currency type switching device provided by an embodiment of this application, the device includes a determining unit 310, a judging unit 320, and a switching unit 330,
wherein the determining unit 310 determines a user-selected currency type and a payment channel for a payment;
the judging unit 320 judges whether the payment channel supports the currency type; and
the switching unit 330 switches the currency type to a currency type supported by the payment channel, if the payment channel does not support the currency type.

According to this embodiment, when the payment channel does not support the user-selected currency type, the user-selected currency type can be automatically and directly switched to a currency type supported by the payment channel at the checkout interface. Therefore, it is not necessary for the user to exit the current checkout interface and reselect a currency type, thus improving payment efficiency and user experience.

In an optional implementation,
the judging unit 320 specifically includes:
a determining subunit which determines a set of currency types supported by the payment channel; and
a judging subunit which judges whether the currency type belongs to the set of currency types;
correspondingly, the switching unit 330 is specifically configured to:
   if the currency type does not belong to the set of currency types, switch the user-selected currency type to a currency type within the set of currency types.

According to this embodiment, under the condition that the payment channel does not support the user-selected currency type, the user-selected currency type can be automatically and directly switched to a currency type in the set of currency types supported by the payment channel in the checkout interface. Therefore, it is not necessary for the user to exit the current checkout interface and reselect a currency type, thus improving payment efficiency and user experience.

In an optional implementation,
the switching unit 330 specifically includes:
a first acquiring subunit which acquires a second currency type supported by an account of a user;
a first judging subunit which judges whether the payment channel supports the second currency type; and
a switching subunit which switches the user-selected currency type to the second currency type, if the payment channel supports the second currency type.

In this embodiment, when the payment channel does not support the currency type, the second currency type supported by the account of the user is acquired, and after it is determined that the payment channel supports the second currency type, the user-selected currency type is switched to the second currency type. In this way, it can be ensured that the currency type after switching is a currency type supported by the account of the user.

In an optional implementation,
the switching subunit specifically includes:
a second acquiring subunit which acquires a payment amount of a current payment, if the payment channel supports the second currency type;
a second judging subunit which judges whether an account balance or credit limit of the second currency type exceeds the payment amount; and
a second switching subunit which switches the user-selected currency type to the second currency type, if the account balance or credit limit of the second currency type exceeds the payment amount.

According to this embodiment, the currency type after switching is supported by the account of the user, what is more, the account balance or credit limit of the currency type after switching exceeds the payment amount, thus avoiding the payment failure problem caused by insufficient account balance or credit limit.

In an optional implementation,
the device further includes:
a calculating unit which calculates a payment amount of the currency type after switching according to an exchange rate.

According to this embodiment, the change of the payment amount after switching is further improved, so that the user can view the change conveniently, and user experience is further improved.

Corresponding to the foregoing embodiment of the payment channel switching method, this application also provides an embodiment of a payment channel switching device.

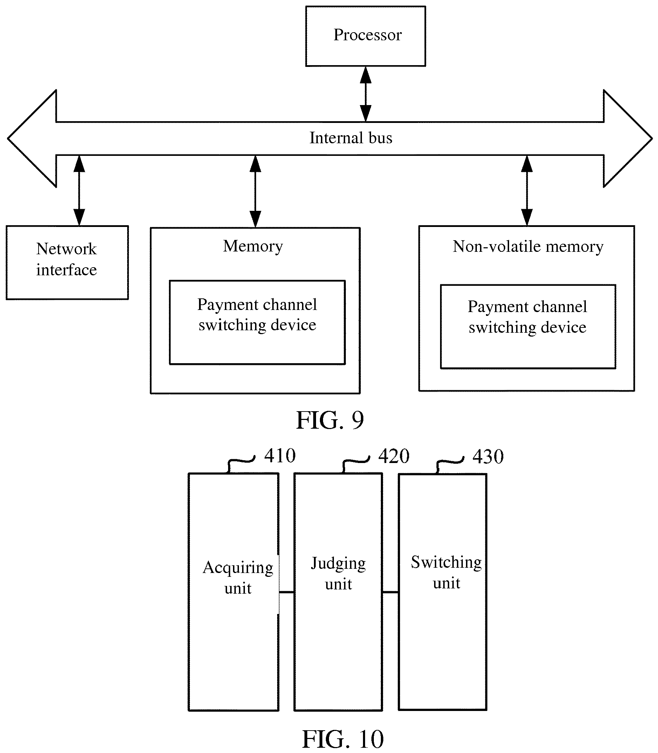

The embodiment of the payment channel switching device of this application can be applied to a checkout device for payment application. The embodiment of the device may be implemented by software, or by hardware or a combination of hardware and software. Taking software implementation as an example, as a logical device, the device is formed by reading a corresponding computer program instruction in a non-volatile memory into a memory for operation through a processor of the equipment in which the device is located. In terms of hardware, as shown in FIG. 9 which is a hardware structure diagram of the equipment where the payment channel switching device provided by this application is located, in addition to the processor, a network interface, the memory and the non-volatile memory shown in FIG. 9, the equipment where the device in the embodiment is located may also include other hardware according to an actual currency type switching function, which will not be described in detail here.

Referring to FIG. 10 which is a modular diagram of the payment channel switching device provided by an embodiment of this application, the device includes a determining unit 410, a judging unit 420, and a switching unit 430,
wherein the determining unit 410 determines a user-selected currency type and a payment channel for a payment;
the judging unit 420 judges whether the payment channel supports the currency type; and
a switching unit 430 switches to a payment channel supporting the currency type, if the payment channel does not support the currency type.

According to the embodiments of this application, under the condition that the payment channel does not support the user-selected currency type, the user-selected payment channel can be automatically and directly switched to a payment channel supporting the currency type at the checkout interface. Therefore, it is not necessary for the user to exit the current checkout interface and reselect a currency type, thus improving payment efficiency and user experience.

In an optional implementation,
the judging unit 420 specifically includes:
a determining subunit which determines a set of currency types supported by the payment channel; and
a judging subunit which judges whether the currency type belongs to the set of currency types;
correspondingly, the switching unit 430 is specifically configured to:
   if the currency type does not belong to the set of currency types, switch the payment channel to a payment channel supporting the currency type.

In an optional implementation,
the switching unit 430 specifically includes:
an acquiring subunit which acquires second payment channels supporting the currency type;
a determining subunit which determines a second payment channel to be switched from the second payment channels, according to historical usage information of the second payment channels; and
a switching subunit which switches the payment channel to the second payment channel to be switched.

In an optional implementation,
the determining subunit is specifically configured to:
according to the number of historical uses of the second payment channels, select a second payment channel with the largest number of historical uses as the second payment channel to be switched.

According to this embodiment, during payment channel switching, there are multiple second payment channels supporting the currency type at the same time, and a second payment channel with the largest number of historical uses can be selected as the second payment channel to be switched based on the historical usage information of the second payment channels, so that the payment channel after switching is more in line with the historical usage habits of the user.

In an optional implementation,
the determining subunit is specifically configured to:
according to the time of latest usage of the second payment channels, select a second payment channel with the nearest usage time as the second payment channel to be switched.

According to this embodiment, during payment channel switching, there are multiple second payment channels supporting the currency type at the same time, and a second payment channel with the nearest time of latest usage can be selected as the second payment channel to be switched based on the historical usage information of the second payment channels, so that the payment channel after switching is more in line with the historical usage habits of the user.

The system, apparatus, module or unit described in the above embodiments may be implemented by a computer chip or entity, or by a product having a particular function. A typical implementation device is a computer, and the specific form of the computer may be a personal computer, a laptop computer, a cellular telephone, a camera phone, a smartphone, a personal digital assistant, a media player, a navigation device, an email transceiver device, a game console, a tablet computer, a wearable device, or a combination thereof.

The implementation of the functions and effects of the various units in the above-described apparatus is described in detail in the implementation of the corresponding steps in the above-described method and will not be described in detail herein.

The apparatus embodiments substantially correspond to the method embodiments. Therefore, for related parts of the apparatus embodiments, reference will now be made in part to the description of the method embodiments. The apparatus embodiments described above are merely exemplary. The unit as illustrated by the separation member may or may not be physically separated, the component shown as a unit may or may not be a physical unit, may be located in one place or may be distributed on multiple network units. Some or all of the modules may be selected according to practical requirements to achieve the objectives of the present invention. A person of ordinary skill in the art would understand and implement without the present invention involving any inventive effort.

Other embodiments of this application will be apparent to those skilled in the art from consideration of the specification and practice of the present disclosure disclosed here. This application is intended to cover any variations, uses, or adaptations of this application following the general principles thereof and including such departures from this application as come within known or customary practice in the art. It is intended that the specification and examples be considered as exemplary only, with a true scope and spirit of this application being indicated by the following claims.

It will be appreciated that this application is not limited to the exact construction that has been described above and illustrated in the accompanying drawings, and that various modifications and changes can be made without departing from the scope thereof. It is intended that the scope of this application only be limited by the appended claims.

## Claims

1. A currency type switching method, comprising:
determining a user-selected currency type and a payment channel for a payment;
judging whether the payment channel supports the user-selected currency type; and
if the payment channel does not support the user-selected currency type, switching the user-selected currency type to a currency type supported by the payment channel.

2. The method according to claim 1, wherein judging whether the payment channel supports the user-selected currency type specifically comprises:
determining a set of currency types supported by the payment channel; and
judging whether the user-selected currency type belongs to the set of currency types, wherein, if the payment channel does not support the user-selected currency type, switching the user-selected currency type to a currency type supported by the payment channel specifically comprises:
if the user-selected currency type does not belong to the set of currency types, switching the user-selected currency type to a currency type within the set of currency types.

3. The method according to claim 1, wherein switching the user-selected currency type to a currency type supported by the payment channel specifically comprises:
acquiring a second currency type supported by an account of a user;
judging whether the payment channel supports the second currency type; and
if the payment channel supports the second currency type, switching the user-selected currency type to the second currency type.

4. The method according to claim 3, wherein switching the user-selected currency type to the second currency type if the payment channel supports the second currency type specifically comprises:
if the payment channel supports the second currency type, acquiring a payment amount of the payment;
judging whether an account balance or a credit limit of the second currency type exceeds the payment amount; and
if the account balance or the credit limit of the second currency type exceeds the payment amount, switching the user-selected currency type to the second currency type.

5. The method according to claim 1, further comprising:
calculating a payment amount of the currency type after switching according to an exchange rate.

6. A payment channel switching method, comprising:
determining a user-selected currency type and a payment channel for a payment;
judging whether the payment channel supports the user-selected currency type; and
if the payment channel does not support the user-selected currency type, switching the payment channel to a payment channel supporting the user-selected currency type.

7. The method according to claim 6, wherein judging whether the payment channel supports the user-selected currency type specifically comprises:
determining a set of currency types supported by the payment channel; and
judging whether the currency type belongs to the set of currency types;
wherein, if the payment channel does not support the user-selected currency type, switching the payment channel to a payment channel supporting the user-selected currency type specifically comprises:
if the user-selected currency type does not belong to the set of currency types, switching the payment channel to the payment channel supporting the user-selected currency type.

8. The method according to claim 6, wherein switching the payment channel to a payment channel supporting the user-selected currency type specifically comprises:
acquiring second payment channels supporting the user-selected currency type;
according to historical usage information of the second payment channels, determining a second payment channel to be switched to from the second payment channels; and
switching the payment channel to the second payment channel to be switched.

9. The method according to claim 8, wherein determining a second payment channel to be switched to from the second payment channels according to historical usage information of the second payment channels specifically comprises:
according to a number of historical uses of the second payment channels, selecting a second payment channel with the largest number of historical uses as the second payment channel to be switched.

10. The method according to claim 8, wherein determining a second payment channel to be switched to from the second payment channels according to historical usage information of the second payment channels specifically comprises:
according to the time of latest usage of the second payment channels, selecting a second payment channel with the nearest usage time as the second payment channel to be switched.

11. A currency type switching device, comprising:
a determining unit which acquires a user-selected currency type and a payment channel for a payment;
a judging unit which judges whether the payment channel supports the user-selected currency type; and
a switching unit which switches the user-selected currency type to a currency type supported by the payment channel, if the payment channel does not support the user-selected currency type.

12. The device according to claim 11, wherein the judging unit specifically comprises:
a determining subunit which determines a set of currency types supported by the payment channel; and
a judging subunit which judges whether the user-selected currency type belongs to the set of currency types;
wherein, the switching unit is specifically configured to:
if the user-selected currency type does not belong to the set of currency types, switch the user-selected currency type to a currency type within the set of currency types.

13. The device according to claim 11, wherein the switching unit specifically comprises:
a first acquiring subunit which acquires a second currency type supported by an account of a user;
a first judging subunit which judges whether the payment channel supports the second currency type; and
a switching subunit which switches the user-selected currency type to the second currency type, if the payment channel supports the second currency type.

14. The device according to claim 13, wherein the switching subunit specifically comprises:
a second acquiring subunit which acquires a payment amount of the payment, if the payment channel supports the second currency type;
a second judging subunit which judges whether an account balance or a credit limit of the second currency type exceeds the payment amount; and
a second switching subunit which switches the user-selected currency type to the second currency type, if the account balance or the credit limit of the second currency type exceeds the payment amount.

15. The device according to claim 11, further comprising:
a calculating unit which calculates a payment amount of the currency type after switching according to an exchange rate.

16. A payment channel switching device, comprising:
a determining unit which determines a user-selected currency type and a payment channel for a payment;
a judging unit which judges whether the payment channel supports the user-selected currency type; and
a switching unit which switches the payment channel to a payment channel supporting the user-selected currency type, if the payment channel does not support the user-selected currency type.

17. The device according to claim 16, wherein the judging unit specifically comprises:
a determining subunit which determines a set of currency types supported by the payment channel; and
a judging subunit which judges whether the user-selected currency type belongs to the set of currency types;
correspondingly, the switching unit is specifically configured to:
if the user-selected currency type does not belong to the set of currency types, switch the payment channel to the payment channel supporting the currency type.

18. The device according to claim 16, wherein the switching unit specifically comprises:
an acquiring subunit which acquires second payment channels supporting the user-selected currency type;
a determining subunit which determines a second payment channel to be switched from the second payment channels, according to historical usage information of the second payment channels; and
a switching subunit which switches the payment channel to the second payment channel to be switched.

19. The device according to claim 18, wherein the determining subunit is specifically configured to:
according to a number of historical uses of the second payment channels, select a second payment channel with the largest number of historical uses as the second payment channel to be switched.

20. The device according to claim 18, wherein the determining subunit is specifically configured to:
according to the time of latest usage of the second payment channels, select a second payment channel with the nearest usage time as the second payment channel to be switched.
